Europäisches Patentamt

European Patent Office

Office européen des brevets

(11) Numéro de publication: **0 223 676**
A1

## DEMANDE DE BREVET EUROPEEN

(21) Numéro de dépôt: 86402367.6

(22) Date de dépôt: 22.10.86

(51) Int. Cl.⁴: **G 11 B 19/20,** G 11 B 17/028, G 11 B 17/038, G 11 B 23/00, H 02 K 7/14

(30) Priorité: 23.10.85 FR 8515719

(43) Date de publication de la demande: 27.05.87 Bulletin 87/22

(84) Etats contractants désignés: DE FR GB IT NL SE

(71) Demandeur: BULL S.A., 121 avenue de Malakoff P.B. 193.16, F-75764 Paris Cédex 16 (FR)

(72) Inventeur: Dupont, Jean, 120 boulevared Bineau, F-92100 Neuilly Sur Seine (FR)

(74) Mandataire: Gouesmel, Daniel et al, BULL S.A. Industrial Property Department 25 avenue de la Grande-Armée, F-75016 Paris (FR)

(54) Système d'entrainement en rotation d'au moins un disque magnetique et moteur electrique inclus dans ce système.

(57) Système d'entraînement en rotation d'au moins un disque magnétique (DISC) possédant un moyeu (MOY) comprenant:

— un moteur électrique (MI) dont l'inducteur (INDUCI) comporte une pluralité d'aimants disposés en anneau (SM₁ à SM₈), l'induit (INDI), l'inducteur (INDUCI), l'arbre (ARBI) du moteur, le moyeu (MOY) étant coaxiaux,

— des moyens d'accouplement du moyeu (MOY) à l'arbre (ARBI),

caractérisé en ce que les moyens d'accouplement sont constitués par l'inducteur (INDUCI) dont la face supérieure est séparée de la partie inférieure du moyeu (MOY) par un entrefer (GI).

Applicable aux mémoires à disques magnétiques.

SYSTEME D'ENTRAINEMENT EN ROTATION D'AU MOINS UN DISQUE MAGNETIQUE ET MOTEUR ELECTRIQUE INCLUS DANS CE SYSTEME.

La présente invention concerne un système d'entraînement en rotation d'au moins un disque magnétique et le moteur électrique inclus dans ce système. Elle est plus particulièrement applicable à l'entraînement des disques magnétiques appartenant aux mémoires à disques des systèmes de traitement de l'information.

On sait que les mémoires à disques magnétiques comportent un ou plusieurs disques coaxiaux qui portent des informations contenues le plus généralement sur leurs deux faces. Le(s) disque(s) comporte(nt) un moyeu central qui est accouplé à l'arbre d'entrainement d'un moteur électrique par l'intermédiaire de moyens d'accouplement. L'ensemble formé par le moteur électrique et les moyens d'accouplement constitue un système d'entraînement en rotation du (des) disque(s) magnétique(s). Il permet d'entraîner ce(s) dernier(s) à vitesse de rotation constante, habituellement de 2400 ou 3600 tours par minute.

La tendance actuelle du développement des mémoires à disques magnétiques est d'augmenter le nombre d'informations contenues par unité de surface des disques. Cela permet de diminuer les dimensions de ceux-ci en particulier la surface où sont enregistrées les informations, sans diminuer le nombre total d'informations enregistrées. Dans ce cas, on est donc amené à réduire de façon sensible les dimensions des mémoires à disques correspondantes et d'utiliser par conséquent des moteurs électriques d'entraînement dont les dimensions sont de plus en plus faibles. Dans cette optique, on utilise des moteurs électriques dit "moteurs plats" dont la longueur (également appelée hauteur) est faible par rapport au diamètre (ces moteurs étant de forme cylindrique).

De tels moteurs électriques plats sont connus. Un moteur de ce type est par exemple utilisé dans la mémoire à disques de type D-520 commercialisée par la société demanderesse.

Un tel moteur comprend :
- un inducteur qui est un disque plat comportant une pluralité d'aimants ayant la forme de secteurs, alternativement de polarité magnétique opposée, ces secteurs étant disposés en anneau sur ce disque plat. L'inducteur est solidaire de l'arbre d'entrainement du moteur ;
- un induit qui est une couronne dont les faces sont parallèles à l'inducteur et qui comporte un nombre pair de bobinages. Lorsqu'un courant circule dans les bobinages de l'induit, ce dernier est soumis au champ magnétique créé par les aimants de l'inducteur, ce qui crée une force tendant à faire tourner ce dernier. L'induit et l'inducteur sont coaxiaux.

Pour faciliter la circulation du flux magnétique continûment variable de l'inducteur à travers l'induit, la perméabilité magnétique de ce dernier est élevée. Pour diminuer les pertes par effet Joule dues aux courants de Foucault à l'intérieur de l'induit, le matériau magnétique constituant ce dernier est feuilleté ou fritté.

Un tel moteur électrique, dont l'inducteur est mobile, est du type à courant continu sans collecteur. Il est muni de capteurs, par exemple à effet Hall ou optiques. Du fait que les bobinages sont fixes, il est nécessaire d'assurer une commutation séquentielle du courant fourni par la source électrique de courant continu aux différents bobinages de l'induit, afin de produire de manière continue le champ tournant produisant la rotation. Il est donc nécessaire de connaître à chaque instant la position relative de l'inducteur par rapport aux bobinages et ceci est obtenu par des procédés électroniques désormais bien connus mettant en oeuvre des capteurs du type de ceux mentionnés plus haut. Ceux-ci fournissent des impulsions électriques permettant de détecter à tout instant la position angulaire de l'inducteur et par suite la position de chacun des aimants de celui-ci.

Dans la pratique courante, plus particulièrement dans le cas des disques amovibles contenus par exemple dans des cartouches, les moyens d'accouplement du (des) disque(s) à l'arbre du moteur électrique tel que celui décrit ci-dessus sont constitués par un aimant permanent en forme d'anneau solidaire de l'arbre d'entrainement du moteur et disposé entre la partie supérieure du moteur (voisine de l'inducteur) et la partie inférieure du moyeu du disque disposée en regard de la partie supérieure du moteur. Une telle solution est par exemple décrite dans le brevet FR N° 2.337.396 déposé le 24 Décembre 1975 par La Compagnie Honeywell Bull. Il est clair que la partie inférieure du moyeu du disque est constituée par un matériau magnétique de préférence non rémanent.

L'arbre d'entrainement du moteur et le moyeu du disque comportent également des moyens de centrage permettant de faire coïncider l'axe de rotation du moteur avec celui du moyeu du disque.

Si l'on veut diminuer encore, comme c'est le cas actuellement, les dimensions des mémoires à disques de manière à obtenir des mémoires à disques extra-plates sans diminuer le nombre d'informations qu'elles contiennent, un système d'entraînement de disque(s), tel que celui décrit plus haut reste trop encombrant, alors que le nombre de pièces le constituant et donc son coût sont trop élevés.

La présente invention permet de remédier à ces inconvénients en réalisant un système d'entraînement de disque(s) comportant un moteur extra-plat, où l'inducteur du moteur outre sa fonction traditionnelle de production du couple moteur assure également celle d'accouplement de l'arbre d'entrainement du moteur au moyeu du disque. On supprime donc ainsi l'aimant en forme d'anneau disposé entre le moteur et le moyeu du disque qui traditionnellement, assumait cette fonction d'accouplement.

Selon l'invention le système d'entraînement en rotation d'au moins un disque magnétique possédant un moyeu, qui comprend :

- un moteur électrique dont l'arbre d'entrainement porte l'inducteur qui comporte une pluralité d'aimants disposés en anneau et alternativement de polarité magnétique opposée et dont l'induit comporte une pluralité de bobinages électriques, l'arbre d'entrainement, l'inducteur, l'induit et le moyeu du disque étant coaxiaux,

- des moyens d'accouplement du moyeu du disque à l'arbre du moteur,

est caractérisé en ce que les moyens d'accouplement sont constitués par l'inducteur du moteur dont la face disposée en regard de la face inférieure du moyeu du disque réalisé en matériau magnétique, est séparée de cette dernière par un entrefer dont l'épaisseur définit la force d'attraction (d'accouplement) entre l'inducteur et le moyeu du disque.

D'autres caractéristiques et avantages de la présente invention apparaîtront dans la description suivante donnée à titre d'exemple non limitatif et en se référant aux dessins annexés.

Sur ces dessins :

- la figure 1 est une vue en coupe en section rabattue d'un système d'entraînement en rotation d'un disque magnétique appartenant à une mémoire à disques selon l'art antérieur, prise dans un plan passant par l'axe de rotation du disque,

- la figure 2 est une vue de dessus de l'inducteur mobile du moteur électrique appartenant au système d'entraînement selon l'art antérieur,

- la figure 3 est une vue en coupe d'un système d'entrainement de disque magnétique appartenant à une mémoire à disques, selon la présente invention, prise dans un plan passant par l'axe de rotation du disque,

- la figure 4 qui est une vue en coupe du système d'entraînement selon l'invention prise dans un plan ne passant pas par l'axe de rotation du disque, montre comment l'inducteur assure la fonction d'accouplement de l'arbre d'entraînement du moteur au moyeu du disque,

- la figure 5 est une vue de dessus de l'induit du moteur électrique appartenant au système d'entraînement selon l'invention,

- la figure 6 composée des figures 6a à 6c qui sont des vues de dessus du moteur d'entrainement montrant l'induit et l'inducteur illustrent le fonctionnement du moteur d'entraînement du système d'entrainement de disque pour mémoire à disques selon l'invention.

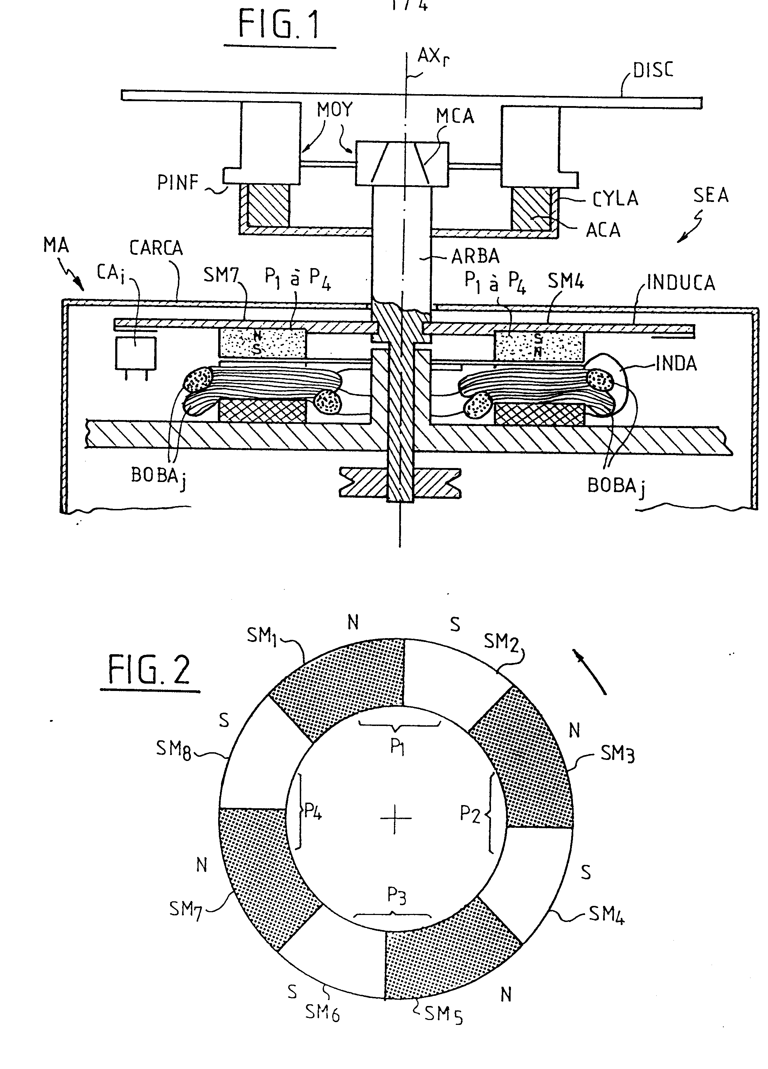

On considère les figures 1 et 2 qui montrent comment est constitué un système d'entraînement selon l'art antérieur et quel est son principal inconvénient.

Un tel système d'entraînement SEA comprend :
- un moteur d'entrainement MA dit "moteur plat",
- des moyens d'accouplement ACA de l'arbre d'entrainement ARBA du moteur MA au moyeu MOY d'un disque magnétique DISC appartenant à une mémoire à disques.

Le moteur MA comprend un induit fixe INDA au-dessus duquel est disposé l'inducteur mobile INDUCA monté sur l'arbre d'entraînement ARBA, et une carcasse CARCA entourant l'induit et l'inducteur. Cette carcasse est réalisée dans un matériau permettant d'éviter que les lignes de flux de l'inducteur ne passent à l'extérieur du moteur, principalement vers le disque, dont elles perturberaient alors les informations.

L'induit INDA, l'inducteur INDUCA, l'arbre d'entraînement ARBA et le moyeu MOY du disque DISC sont coaxiaux et leur axe commun est l'axe de rotation $AX_r$ autour duquel tourne le disque DISC et l'arbre d'entrainement ARBA.

L'induit INDA à forte perméabilité magnétique comporte une pluralité de bobinages électriques $BOBA_j$ en nombre pair.

L'inducteur INDUCA comporte un disque DA par exemple en fer doux sur lequel est disposée une couronne cylindrique comportant huit secteurs $SM_1$ à $SM_8$ aimantés, alternativement de polarité magnétique opposée. Les secteurs $SM_1$, $SM_3$, $SM_5$, $SM_7$ ont ainsi une première polarité magnétique telle que la partie supérieure du secteur visible de dessus à la figure 2 soit considérée par exemple comme un pôle magnétique nord alors que sa partie inférieure est considérée comme un pôle magnétique sud (voir également la figure 1 où le secteur magnétique $SM_7$ est montré à gauche de l'axe de rotation $AX_r$ du système d'entrainement SMA). Les secteurs magnétiques $SM_2$ , $SM_4$, $SM_6$, $SM_8$, ont une seconde polarité magnétique opposée à la première de telle sorte que leur partie supérieure puisse être considérée comme un pôle magnétique sud et leur partie inférieure comme un pôle magnétique nord (voir le secteur magnétique $SM_4$ représenté à droite de l 'axe de rotation $AX_r$ du système d'entrainement SEA à la figure 1).

Le moteur MA comprend également trois capteurs $CA_i$ permettant de déterminer à chaque instant la position angulaire de l'inducteur dont un seul est montré à la figure 1.

Le fonctionnement du moteur d'entrainement MA est celui d'un moteur à courant continu sans collecteur et a été rappelé brièvement plus haut.

Les moyens d'accouplement ACA sont constitués par un aimant en forme d'anneau disposé à l'intérieur d'une coupelle de forme cylindrique CYLA réalisée en matériau non magnétique. La coupelle CYLA est montée solidaire de l'arbre ARBA et l'aimant ACA a un axe de symétrie qui se confond avec l'axe de rotation $AX_r$ du disque DISC. L'aimant ACA exerce une force d'attraction (force d'accouplement) sur le moyeu MOY et est en contact avec sa partie inférieure PINF qui est généralement plane et a la forme d'une couronne circulaire, tout en étant réalisée dans un matériau magnétique non rémanent.

La figure 1 permet de voir qu'il est difficile de réduire davantage l'encombrement du système d'entrainement SEA et par conséquent l'encombrement de la mémoire à disques le contenant. En effet, il y a une limite au-delà de laquelle il n'est plus possible de rapprocher l'aimant ACA du moteur MA. En effet, au-delà de cette limite, il y aurait interférence entre les champs magnétiques de l'aimant ACA et le champ magnétique des différents aimants de l'inducteur.

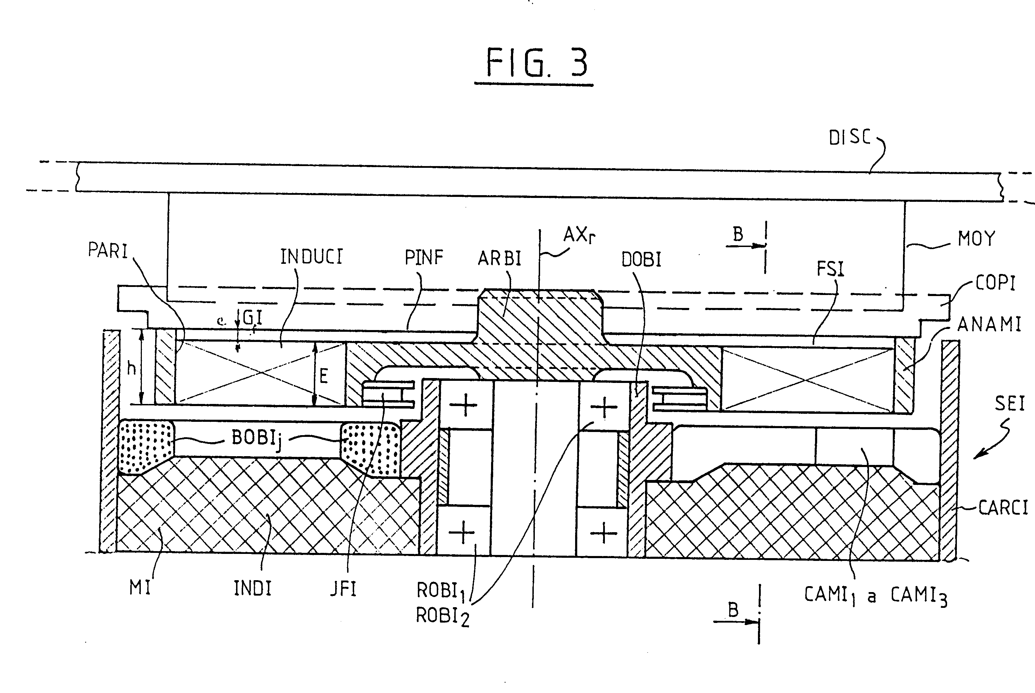

Le système d'entraînement SEI selon l'invention montré en coupe à la figure 3 comprend :
- le moteur MI qui est du type à courant continu sans collecteur comportant un induit INDI et un inducteur INDUCI,
- l'anneau cylindrique ANAMI entourant l'inducteur et l'entrefer GI qui sépare ce dernier du moyen MOY du disque DISC,

- la carcasse cylindrique CARCI.

L'inducteur exerce simultanément deux fonctions, à savoir d'une part, la production du couple moteur et d'autre part l'accouplement de l'arbre ARBI du moteur avec le moyeu MOY du disque DISC par l'intermédiaire de l'entrefer GI et de l'anneau cylindrique ANAMI comme on le comprendra mieux à la lumière de la description ci-dessous.

L'inducteur INDUCI comprend, comme l'inducteur du moteur MA montré à la figure 2, huit secteurs aimantés $SM_1$ à $SM_8$ formant quatre paires de pôles $P_1$, $P_2$, $P_3$, $P_4$ et est monté sur l'arbre d'entraînement en rotation du moteur ARBI. Il a la forme d'une couronne cylindrique circulaire. L'inducteur, l'induit, le moyeu du disque et l'arbre d'entraînement sont coaxiaux et leur axe est l'axe de rotation du moteur $AX_r$ (et donc du disque DISC). L'arbre d'entraînement comporte une partie supérieure cylindrique venant s'insérer dans un logement cylindrique approprié du moyeu MOY de manière à assurer le centrage du moyeu MOY par rapport à l'arbre ARBI et à les rendre coaxiaux.

L'anneau cylindrique en métal non magnétique ANAMI, qui entoure l'inducteur a son axe de symétrie qui est confondu avec l'axe de rotation $AX_r$. La surface intérieure de l'anneau ANAMI est en contact avec la paroi externe PARI de la couronne cylindrique circulaire constituant l'inducteur.

La hauteur h de l'anneau ANAMI (mesurée parallèlement à l'axe de rotation $AX_r$) est légèrement supérieure à la hauteur E de l'inducteur (cette hauteur est également appelée épaisseur). L'anneau ANAMI est en contact avec la coupelle COPI en matériau magnétique non rémanent (par exemple en acier) constituant la partie inférieure du moyeu MOY du disque DISC, alors que la face supérieure plane FSI de l'inducteur INDUCI (face de l'inducteur qui est la plus proche et disposée en regard du moyeu MOY) est située à une distance e de cette coupelle COPI. L'espace d'épaisseur e compris entre cette face supérieure FSI de l'inducteur INDUCI et la partie inférieure PINF de la coupelle COPI constitue l'entrefer GI séparant la coupelle et l'inducteur. On a donc h = E + e.

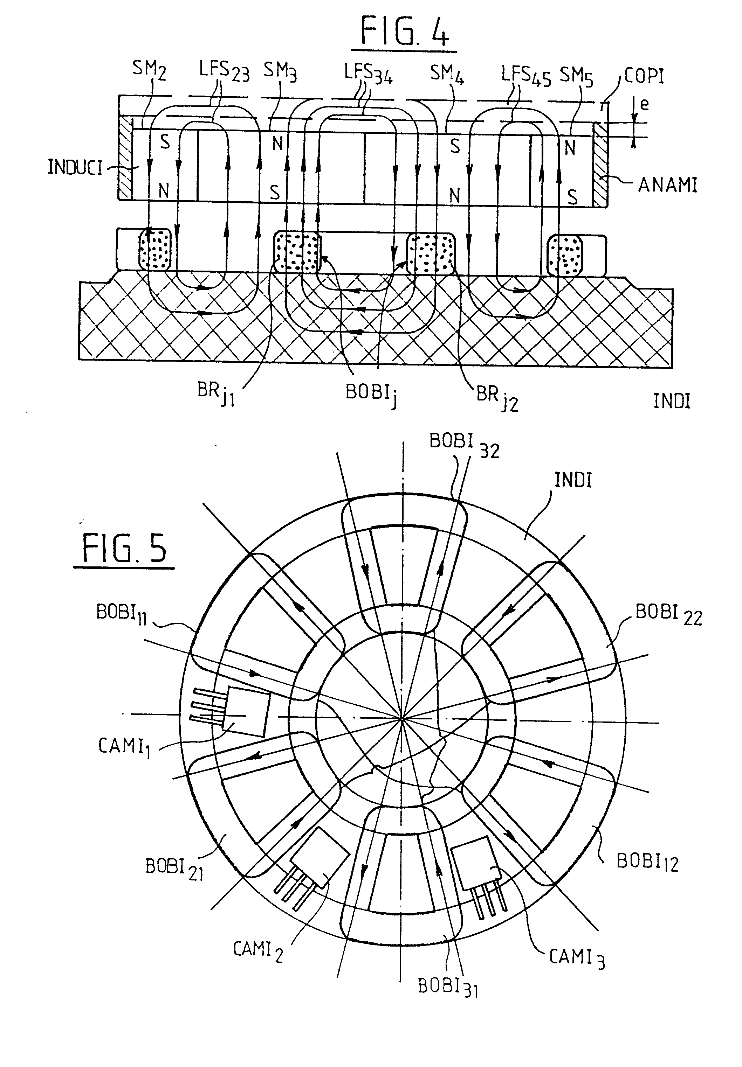

On considère la figure 4 qui est une vue en coupe prise selon B (voir figure 3) et qui montre comment l'inducteur INDUCI accomplit sa fonction d'accouplement entre le moyeu du disque MOY et l'arbre d'entrainement ARBI du moteur MI.

De gauche à droite sur la figure 4, on voit les secteurs magnétiques $SM_2$, $SM_3$, $SM_4$, $SM_5$ de l'inducteur et on a représenté les lignes de flux magnétique existant entre chacun de ces secteurs et se refermant à travers d'une part l'induit INDI et d'autre part la coupelle COPI du moyeu MOY du disque. Ainsi, les lignes de flux $LFS_{2.3}$ relient le secteur $SM_3$ au secteur magnétique $SM_2$ en passant par l'induit INDI et la coupelle COPI. De même les lignes de flux $LFS_{3.4}$ passent entre le secteur magnétique $SM_3$ et le secteur magnétique $SM_4$ en passant par l'induit INDI et la coupelle COPI. Il en est de même pour les lignes de flux $LFS_{4.5}$ qui relient le secteur magnétiques $SM_5$ et le secteur magnétique $SM_4$.

L'existence des lignes de flux $LFS_{2.3}$, $LFS_{3.4}$, $LFS_{4.5}$ passant par la coupelle COPI crée une force d'attraction entre les différents secteurs magnétiques $SM_2$ à $SM_5$ et la coupelle COPI et par conséquent entre ceux-ci et le moyeu MOY par l'intermédiaire de celle-ci. L'intensité de cette force d'attraction dite encore force d'accouplement, dénommée $F_a$ est fonction de l'épaisseur e de l'entrefer qui sépare la coupelle COPI de la face supérieure FSI de l'inducteur INDUCI.

La plus grande partie des lignes de flux telles que $LFS_{2.3}$ doit se refermer à l'intérieur de la coupelle COPI et éviter de traverser celle-ci. Si ce n'est pas le cas, les lignes de flux perturbent les informations enregistrées sur le disque magnétique DISC. Dans la détermination de l'épaisseur e de l'entrefer, il convient donc de tenir compte de deux impératifs contradictoires, à savoir d'une part, une intensité suffisante de la force d'attraction $F_a$ assurant un accouplement correct entre le moyeu MOY et l'arbre ARBI, et d'autre part le souci de ne pas perturber les informations magnétiques enregistrées sur le disque DISC.

Il est clair que le raisonnement qui a été effectué ci-dessus concernant les secteurs magnétiques $SM_2$ à $SM_5$ est également valable pour les secteurs magnétiques non représentés à la figure 4, à savoir, les secteurs magnétiques $SM_1$, $SM_6$ à $SM_8$ et que c'est l'ensemble des secteurs $SM_1$ à $SM_8$ qui produit la force d'attraction Fa.

L'induit INDI, vu de dessus à la figure 5, identique à l'induit du moteur MA, comporte, par exemple six bobinages. Electriquement, chaque bobinage est connecté en série avec le bobinage qui lui est diamètralement opposé. Ainsi, le bobinage $BOBI_{1.1}$ est connecté en série avec le bobinage $BOBI_{1.2}$, qui lui est diamètralement opposé, le bobinage $BOBI_{2.1}$ est connecté en série avec le bobinage $BOBI_{2.2}$ qui lui est diamètralement opposé, et le bobinage $BOBI_{3.1}$ est connecté en série avec le bobinage $BOBI_{3.2}$ qui lui est diamètralement opposé.

Le moteur MI comporte trois capteurs magnétiques à effet hall $CAMI_1$ à $CAMI_3$. Le capteur $CAMI_1$ est disposé entre les bobinages $BOBI_{1.1}$ et $BOBI_{2.1}$, le capteur $CAMI_2$ est disposé entre le bobinage $BOBI_{2.1}$ et le bobinage $BOBI_{3.1}$, alors que le capteur $CAMI_3$ est disposé entre le bobinage

$BOBI_{3.1}$ et le bobinage $BOBI_{1.2}$ (voir figure 5). Les capteurs $CAMI_1$ à $CAMI_3$ sont équidistants entre eux et sont disposés à 60° les uns des autres, sur un cercle ayant pour centre le centre de la couronne circulaire formant l'induit INDI.

Le moteur MI comprend deux roulements à bille $ROBI_1$, $ROBI_2$, montés sur l'arbre ARBI à l'intérieur d'une douille à billes DOBI de forme cylindrique ayant pour axe de symétrie l'axe de rotation $AX_r$ de l'arbre d'entraînement ARBI et solidaire de INDI. Il comprend également un joint ferrofluidique JFI disposé au-dessus de l'induit INDI au niveau de l'inducteur INDUCI, entre ces deux éléments, ce joint ferrofluidique ayant pour axe de symétrie l'axe de rotation $AX_r$. Ce joint ferrofluidique JFI a pour but d'éviter que les vapeurs d'huile de lubrification du moteur MI ainsi que les poussières ne remontent vers le disque magnétique DISC.

La carcasse CARCI, est ouverte vers la partie supérieure (et n'est donc plus refermée comme c'est le cas pour la carcasse CARCA) de manière à ce que l'inducteur puisse exercer directement sa force d'attraction sur la coupelle COPI. Elle est de forme cylindrique et sa partie intérieure tangente l'induit. Sa partie supérieure est sensiblement au même niveau que la partie supérieure de l'anneau ANAMI (et par conséquent la partie inférieure de la coupelle COPI).

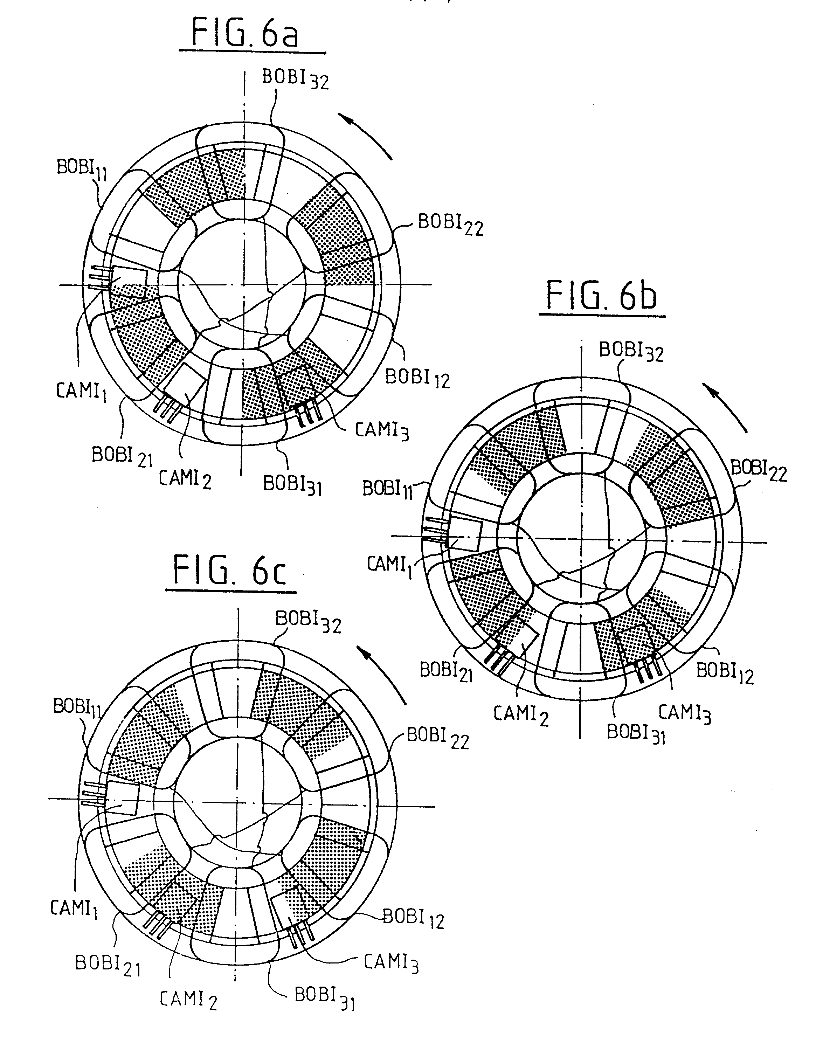

Le fonctionnement du système d'entraînement SEI selon l'invention qui est illustré par les figures 4, 6a et 6d est exposé ci-dessous.

Les paires de bobinages $BOBI_{1.1}$ - $BOBI_{1.2}$, $BOBI_{2.1}$-$BOBI_{2.2}$, $BOBI_{3.1}$ - $BOBI_{3.2}$ sont connectées électriquement de telle sorte que les forces engendrées par le passage du courant continu I dans les conducteurs formant chacun des deux bobinages d'une paire, s'ajoutent entre elles. De même, si l'on considère les deux branches radiales d'un même bobinage, par exemple, les deux branches $BR_{j1}$ et $BR_{j2}$ du bobinage $BOBI_j$ à la figure 4, on voit que la force à laquelle sera soumise le bobinage sera maximum lorsque celui-ci sera simultanément en regard de deux secteurs magnétiques successifs de polarité opposée, chacune des deux branches radiales étant en regard d'un même secteur de polarité magnétique déterminée. Ainsi si l'on considère la figure 4, la branche $BR_{j2}$ est complètement en regard du secteur magnétique $SM_4$, alors que la branche $BR_{j1}$ est complètement en regard du secteur magnétique $SM_3$. Dans ce cas, du fait que les courants qui circulent dans chacune de ces deux branches $BR_{j1}$ et $BR_{j2}$ sont de sens opposé (voir par exemple la figure 5 où l'on a représenté le sens de circulation du courant dans chacune des branches radiales des différents bobinages $BOBI_{1.1}$ à $BOBI_{3.2}$), les forces qui s'exercent sur les deux secteurs magnétiques de polarité opposée $SM_4$ et $SM_3$ de l'inducteur s'ajoutent. On alimente donc en courant I une paire de bobinages lorsque les deux branches radiales de chacun de ceux-ci se trouvent simultanément en regard de deux secteurs magnétiques successifs de polarité magnétique opposée. Ainsi, si l'on considère les figures 6a, 6b et 6c, la paire de bobinages $BOBI_{3.1}$ - $BOBI_{3.2}$ est alimentée en courant lorsque l'inducteur et cette paire occupent la position relative indiquée à la figure 6a, la paire de bobinages $BOBI_{1.1}$-$BOBI_{1.2}$ est alimentée en courant lorsque l'inducteur et cette dernière paire se trouvent dans la position relative occupée à la figure 6b, et la paire de bobinages $BOBI_{2.1}$-$BOBI_{2.2}$ est alimentée en courant lorsque l'inducteur et cette paire occupent la position relative indiquée à la figure 6c.

Lorsque l'un des capteurs magnétiques à effet hall $CAMI_1$ à $CAMI_3$ se trouve complètement en regard d'un secteur magnétique indiqué en couleur foncée aux figures 6a à 6c, son signal de sortie est le niveau logique 1, alors que lorsqu'il se trouve complètement en regard d'un secteur magnétique indiqué en clair sur chacune de ces figures, son niveau de sortie est égal au zéro logique. Lorsque un capteur passe d'un secteur magnétique représenté en foncé aux figures 6a à 6c à un secteur magnétique représenté en clair, son signal de sortie est un niveau logique égal à zéro, alors que lorsqu'il passe d'un secteur magnétique indiqué en clair à un secteur magnétique indiqué en foncé, son signal de sortie est égal au niveau logique 1.

Le tableau (voir annexe) indique, pour chacune des figures 6a, 6b et 6c, le signal logique de sortie des capteurs $CAMA_1$, $CAMA_2$, $CAMA_3$ et quelle est la paire de bobinages alimentée en courant en fonction du signal logique de sortie de ces capteurs.

Ainsi à la figure 6a, les signaux logiques de sortie des capteurs $CAMA_1$ à $CAMA_3$ sont respectivement 0,0,1 et la paire de bobinages alimentée en courant I est la paire $BOBI_{3.1}$-$BOBI_{3.2}$, et ainsi de suite.

Trois autres configurations de signaux logiques de sortie des capteurs sont possibles, non représentées sur les figures. Ce sont respectivement les configurations suivantes 1,1,0 - 1,0,0 - 1,0,1 et les paires de bobinages commandées respectivement en fonction de ces trois dernières configurations sont les paires de bobinages $BOBI_{3.1}$-$BOBI_{3.2}$, $BOBI_{1.1}$-$BOBI_{1.2}$, $BOBI_{2.1}$-$BOBI_{2.2}$. Les configurations de signaux logiques de sorties 0,0,0 et 1,1,1 ne peuvent pas se produire. Il est clair que lorsque l'on passe de la configuration de signaux logiques de sortie des capteurs correspondants à la figure 6a à la configuration des capteurs correspondant à la figure 6b, puis de la configuration indiquée à la figure 6b à la configuration indiquée à la figure 6c et ainsi de suite, on commute séquentiellement le courant de la paire de bobinages $BOBI_{3.1}$ - $BOBI_{3.2}$ à la paire de bobinages $BOBI_{1.1}$- $BOBI_{1.2}$, puis à la paire $BOBI_{2.1}$- $BOBI_{2.2}$, puis de nouveau à la paire $BOBI_{3.1}$-$BOBI_{3.2}$ et ainsi de suite.

A N N E X E

| Figures | Signal Logique de sorties des capteurs | | | Paire de bobinages alimentées en courant I |
|---------|--------------------|--------------------|--------------------|-------------------------------------------|
|         | $CAMA_1$ | $CAMA_2$ | $CAMA_3$ | |
| Fig. 6a | 0 | 0 | 1 | $BOBI_{3.1}-BOBI_{3.2}$ |
| Fig. 6b | 0 | 1 | 1 | $BOBI_{1.1}-BOBI_{1.2}$ |
| Fig. 6c | 0 | 1 | 0 | $BOBI_{2.1}-BOBI_{2.2}$ |

Revendications :

1. Système d'entraînement en rotation d'au moins un disque magnétique (DISC) possédant un moyeu (MOY), comprenant :

- un moteur électrique (MI) dont l'arbre d'entraînement (ARBI) porte l'inducteur (INDUCI) qui comporte une pluralité d'aimants ($SM_1$ à $SM_8$) disposée en anneau alternativement de polarité magnétique opposée et dont l'induit (INDI) comporte une pluralité de bobinages électriques, l'arbre d'entraînement, l'inducteur, l'induit et le moyeu du disque étant coaxiaux,

- des moyens d'accouplement du moyeu (MOY) du disque à l'arbre (ARBI) du moteur (MI), constitués par l'inducteur du moteur caractérisé en ce que la face de l'inducteur (FSI) disposée en regard de la face inférieure (COPI) du moyeu du disque réalisée en matériau magnétique, est séparée de cette dernière par un entrefer dont l'épaisseur définit la force d'attraction (d'accouplement) entre l'inducteur et le moyeu du disque, le moyeu du disque étant disposé entre le disque et l'inducteur, au moins dans la région où l'inducteur et la face inférieure du moyeu sont en regard l'un de l'autre,

2. Système selon la revendication 1 caractérisé en ce que l'inducteur est formé par une couronne plate cylindrique dont la paroi est entourée d'un anneau cylindrique (ANAMI) en matériau non magnétique en contact avec la face inférieure (COPI) du moyeu (MOY) du disque.

3. Système selon revendications 1 ou 2, caractérisé en ce que la face inférieure du moyeu (COPI) est formée par une coupelle cylindrique plate en matériau magnétique non rémanent.

4. Moteur électrique d'entraînement en rotation d'au moins un disque magnétique inclus dans le système d'entraînement selon la revendication 1, caractérisé en ce que son inducteur (INDUCI) est formé par une couronne cylindrique plate dont la paroi est entourée d'un anneau cylindrique (ANAMI) en matériau non magnétique en contact avec la face

0223676

1/4

FIG.1

FIG.2

# FIG. 3

DISC

MOY

PARI    INDUCI    PINF    ARBI    AX$_r$    DOBI    B    FSI    COPI

ANAMI

e. G I

h    E

BOBI$_j$

+    +    +    +    SEI

CARCI

MI    INDI    JFI    ROBI$_1$    CAMI$_1$ a CAMI$_3$
ROBI$_2$

B

2/4    0223676

## FIG. 4

SM₂    LFS₂₃  SM₃    LFS₃₄    SM₄    LFS₄₅ SM₅   COPI

INDUCI

S    N    S    N

N    S    N    S

ANAMI

e

BR_{j1}      BOBI_j      BR_{j2}      INDI

## FIG. 5

BOBI ₃₂
INDI

BOBI₁₁                                    BOBI ₂₂

CAMI₁

BOBI ₂₁                                   BOBI₁₂

CAMI₂       BOBI₃₁       CAMI₃

0223676

## FIG. 6a

BOBI$_{32}$

BOBI$_{11}$

BOBI$_{22}$

BOBI$_{12}$

CAMI$_1$

CAMI$_3$

BOBI$_{21}$

CAMI$_2$

BOBI$_{31}$

## FIG. 6b

BOBI$_{32}$

BOBI$_{11}$

BOBI$_{22}$

CAMI$_1$

BOBI$_{21}$

BOBI$_{12}$

CAMI$_2$

CAMI$_3$

BOBI$_{31}$

## FIG. 6c

BOBI$_{32}$

BOBI$_{11}$

BOBI$_{22}$

BOBI$_{12}$

CAMI$_1$

CAMI$_3$

BOBI$_{21}$

CAMI$_2$

BOBI$_{31}$

Office européen des brevets

# RAPPORT DE RECHERCHE EUROPEENNE

0223676

Numéro de la demande

EP 86 40 2367

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | PATENTS ABSTRACTS OF JAPAN, vol.9, no. 33 (P-334) [1756] 13 février 1985, & JP - A - 59 175 079 (MATSUSHITA DENKI SANGYO K.K.) 03-10-1984 * résumé; figures * | 1,4 | G 11 B 19/20<br>G 11 B 17/028<br>G 11 B 17/038<br>G 11 B 23/00<br>H 02 K 7/14 |
| X | PATENTS ABSTRACTS OF JAPAN, vol. 8, no. 51 (P-259)[1488] 8 mars 1984, & JP - A - 58 200 479 (MATSUSHITA DENKI SANGYO K.K.) 22-11-1983 * résumé ; figures * | 1 | |
| A | IBM TECHNICAL DISCLOSURE BULLETIN, vol. 19, no. 12, mai 1977, pages 4722-4723, New York, US; J.L. BECK et al.: "Hub assembly for flexible disk media" * Page 4723, lignes 26-29; figures * | 1,3 | DOMAINES TECHNIQUES RECHERCHES (Int. Cl.4)<br><br>G 11 B<br>H 02 K |
| A | EP-A-0 086 682 (CII-HONEYWELL BULL) * Page 10, lignes 19-26; figure 3 * | 1 | |
| | --- -/- | | |

Le présent rapport de recherche a été établi pour toutes les revendications

| Lieu de la recherche | Date d'achèvement de la recherche | Examinateur |
|---|---|---|
| LA HAYE | 29-01-1987 | DEVERGRANNE C.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

Office européen<br>des brevets

**RAPPORT DE RECHERCHE EUROPEENNE**

0223676

Numéro de la demande

EP 86 40 2367

| DOCUMENTS CONSIDERES COMME PERTINENTS | Page 2 |
|---|---|

| Catégorie | Citation du document avec indication, en cas de besoin, des parties pertinentes | Revendication concernée | CLASSEMENT DE LA DEMANDE (Int. Cl.4) |
|---|---|---|---|
| A | IBM TECHNICAL DISCLOSURE BULLETIN, vol. 19, no. 7, décembre 1976, pages 2684, 2685, New York, US; F.K. KING et al.: "Cartridge for magnetic disk" * Page 2684, lignes 14,15; figure 2 * | 1 | |
| | --- | | |
| A | FR-A-1 318 926 (THE HAYDON INSTRUMENT COMPANY) * Page 5, ligne 50 - page 6, ligne 24; figures * | 1 | |
| | ----- | | |

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 29-01-1987 | DEVERGRANNE C.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur. mais publié a la date de dépôt ou après cette date
D : cité dans la demande
L : cité pour d'autres raisons

& : membre de la même famille. document correspondant

OEB Form 1503 03 82